Europäisches Patentamt

European Patent Office

Office européen des brevets

(19)

(11) Numéro de publication: **0 375 825 A1**

## (12) DEMANDE DE BREVET EUROPEEN

(21) Numéro de dépôt: **88870200.8**

(22) Date de dépôt: **30.12.88**

(51) Int. Cl.⁵: **A47J 36/20, A47J 27/04**

(43) Date de publication de la demande:
**04.07.90 Bulletin 90/27**

(84) Etats contractants désignés:
**BE CH ES FR GB IT LI LU NL**

(71) Demandeur: **Depoorter, Robert**
**Zwitserlandstraat 14**
**B-8400 Oostende(BE)**

Demandeur: **Crabeels, Daniel**
**Vindictivelaan 19**
**B-8400 Oostende(BE)**

(72) Inventeur: **Depoorter, Robert**
**Zwitserlandstraat 14**
**B-8400 Oostende(BE)**

(74) Mandataire: **Pieraerts, Jacques et al**
**Bureau Gevers S.A. rue de Livourne 7 bte 1**
**B-1050 Bruxelles(BE)**

(54) **Marmite pour la cuisson à l'eau bouillante d'aliments, en particulier mais non exclusivement de légumes.**

(57) Marmite pour la cuisson à l'eau bouillante d'aliments, en particulier mais non exclusivement de légumes, caractérisée en ce qu'elle est constituée d'un récipient extérieur (1) destiné à contenir l'eau de cuisson dans lequel s'adapte un récipient intérieur (2) dont au moins le fond (5) est ajouré et qui est destiné à recevoir les aliments.

Fig.1.

EP 0 375 825 A1

## Marmite pour la cuisson à l'eau bouillante d'aliments, en particulier mais non exclusivement de légumes.

L'invention concerne une marmite pour la cuisson à l'eau bouillante d'aliments, en particulier mais non exclusivement de légumes.

Le but de l'invention est de réaliser un ustensile culinaire, en particulier une marmite , qui permet un mode de cuisson nouveau et original des aliments les plus variés. Dans un mode d'application particulier, cette marmitte peut être utilisée à la cuisson de légumes qui demandent à être égouttés.

Un autre but de l'invention est de réaliser une marmite qui épargne certaines manipulations qui peuvent rendre la cuisson d'aliments fastidieuse et, de plus, écourte le temps de cuisson et améliore les résultats obtenus.

Pour réaliser cet objectif conformément à l'invention, la marmite précitée est constituée d'un récipient extérieur destiné à contenir l'eau de cuisson dans lequel s'adapte un récipient dont au moins le fond est ajouré et qui est destiné à recevoir les aliments.

Dans une forme de réalisation préférentielle le récipient intérieur précité, est réalisé sous la forme d'un corps qui repose par sa base sur le fond du récipient extérieur précité.

Un détail de l'invention réside dans le fait que le fond ajouré du récipient intérieur précité est amovible de telle sorte que des fonds ajourés présentant des perforations de types divers puissent être utilisés.

D'autres détails et particularités de l'invention ressortiront de la description qui sera donnée ci-après d'une marmite pour la cuisson à l'eau bouillante d'aliments, en particulier mais non exclusivement de légumes, selon l'invention. Cette description n'est donnée qu'à titre purement exemplatif et ne limite pas l'invention.
Les notations de référence se rapportent aux figures ci-jointes.

La figure 1 est une vue en élévation de la marmite selon l'invention montrant également, en traits interrompus, le récipient intérieur.

Les figures 2 à 5 montrent divers types de fonds amovibles utilisables dans une marmite selon l'invention.

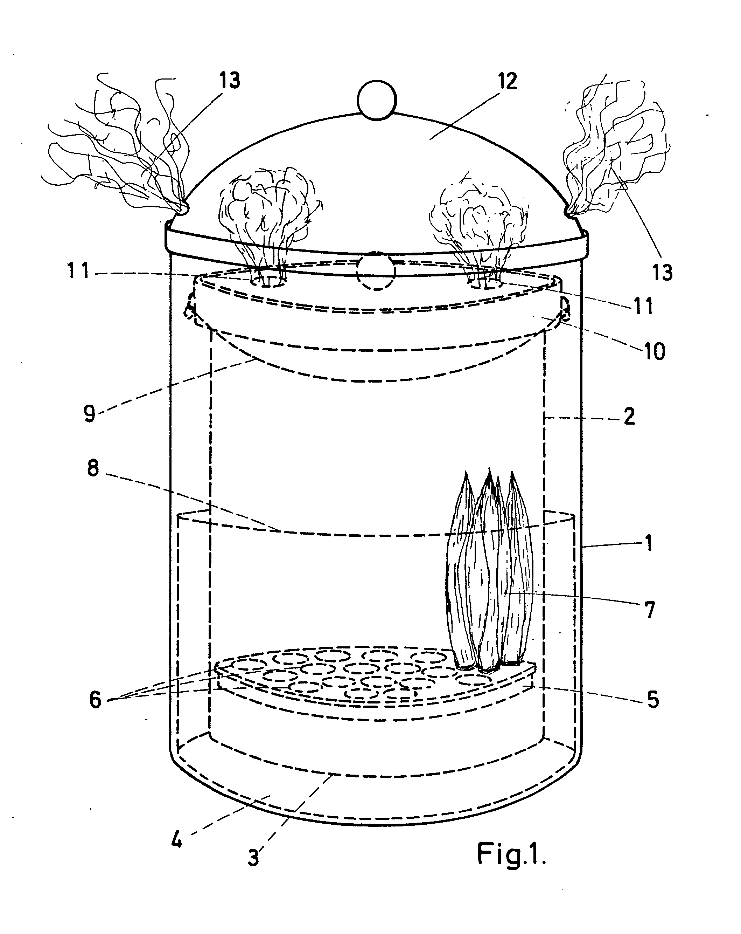

La marmite selon la figure 1, constituée d'un récipient extérieur, a une forme cylindrique, étant bien entendu que tout autre coupe transversale du récipient est possible et ne modifie pas le principe même de la marmite selon l'invention.

L'intérieur du récipient extérieur 1 s'adapte à un récipient intérieur 2 qui, dans la forme d'exécution selon la figure 1, se présente également sous la forme d'un cylindre de diamètre légèrement inférieur à celui du récipient extérieur 1. Le récipient intérieur 2 repose par sa base circulaire 3 sur le fond 4 du récipient extérieur 1.

A une distance prédéterminée de la base du récipient intérieur 2, la paroi interne du récipient intérieur 2, présente une saillie sur laquelle peuvent reposer divers types de fonds amovibles 5.

Un de ces fonds amovibles est représenté à la figure 1 et comporte un nombre d'orifices 6, dont le diamètre à été choisi de telle sorte que les chicons 7 peuvent reposer par leur base dans ces orifices. Les chicons sont placés à la verticale et les récipients intérieur et extérieur 1 et 2 sont remplis d'eau de cuisson jusqu'à un niveau qui est représenté à la figure 1 par le trait interrompu 8.

Cette façon de cuire les chicons est particulièrement avantageuse parce que les légumes demeurent fermes. Lorsque la cuisson est achevée, le récipient intérieur 2 peut être extrait du récipient extérieur 1 en saisissant la poignée 9 dont ce récipient est équipé.

Le récipient intérieur 2 peut être pourvu d'un couvercle 10 muni d'orifices 11 permettant à la vapeur de s'échapper.

Le récipient extérieur 1 est, lui aussi, pourvu d'un couvercle 12, et des orifices 13 sont également prévus dans ce couvercle qui, dans la forme d'exécution préférentielle selon la figure 1 a la forme d'un dôme.

On saisira aisément que lorsque la cuisson des aliments, qui peuvent être tout aussi bien des légumes que de la viande ou du poisson, est achevée on peut extraire les aliments cuits à l'eau et leur permettre d'égoutter sans que le contenu du récipient intérieur 2 doive être transvasé. Il suffit d'extraire le récipient intérieur 2 du récipient extérieur 1 et de le poser à un endroit où l'eau de cuisson peut s'échapper. Les aliments, subissent donc un minimum de manipulation ce qui leur est extrèmement favorable.

Dans certains cas, lorsque ceci est particulièrement recherché, l'eau de cuisson peut être recoltée.

Le fond amovible 5 représenté à la figure 1 a donc été conçu plus particulièrement pour la cuisson, en position verticale, de chicons, mais il est bien entendu que ce fond amovible peut servir à la cuisson de tout autre aliment.

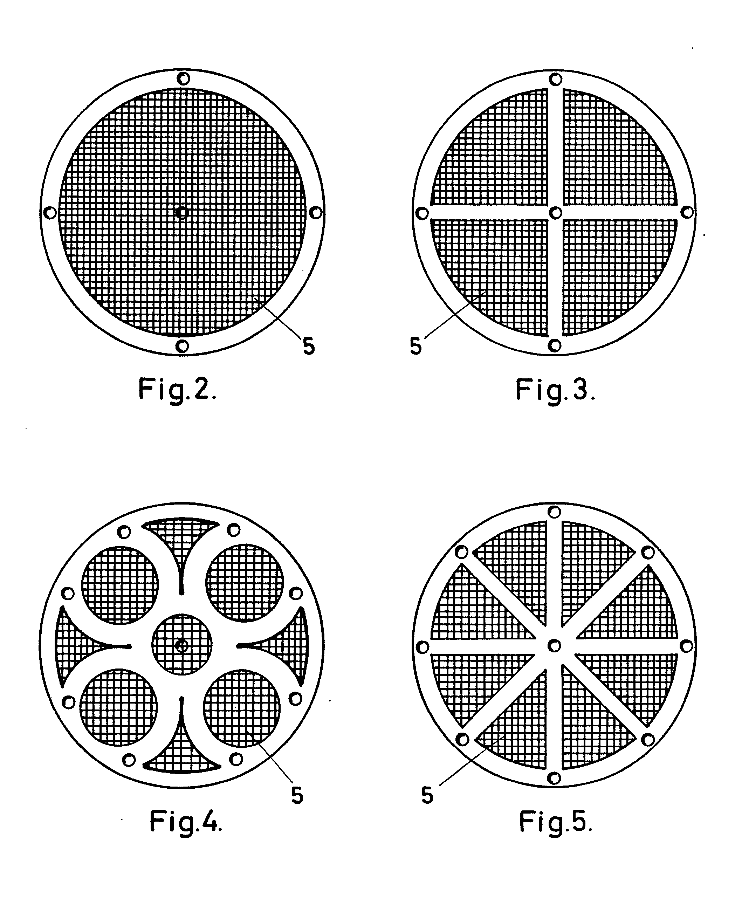

Divers autres types de fonds amovibles présentant des structures diverses ont été représentés aux figures 2 à 5 et ceci à titre purement exemplatif.

Comme on peut le déduire de la description qui vient d'être donnée de la marmite selon l'in-

vention, celle-ci permet une cuisson plus rapide et dans de meilleures conditions d'aliments de tous types et non uniquement de légumes.

On réalisera également que les aliments contenus dans le récipient intérieur 2 puissent être mis à égoutter a l'intérieur du récipient extérieur 1 après que la majeure partie de l'eau en ait été évacuée. Ceci permet aux aliments d'être conservés à une temperature élevée, ce qui n'est pas le cas lorsqu'on égoutte les aliments dans un égouttoir classique.

Le récipient extérieur peut être réalisé en toute matière appropriée et d'usage courant pour de tels articles ménagers. Le récipient intérieur 2 peut être réalisé dans les mêmes matériaux ou en verre résistant aux temperatures élevées tel que du verre connu sous la dénomination commerciale "PYREX". Cette remarque vaut également pour les couvercles des deux récipients extérieur 1 et intérieur 2.

L'invention n'est en aucune manière limitée à la forme d'exécution décrite ci-dessus et bien des modifications pourraient être apportées sans sortir du cadre de la présente demande de brevet.

**Revendications**

1. Marmite pour la cuisson à l'eau bouillante d'aliments, en particulier mais non exclusivement de légumes, caractérisée en ce qu'elle est constituée d'un récipient extérieur (1) destiné à contenir l'eau de cuisson dans lequel s'adapte un récipient intérieur (2) dont au moins le fond (5) est ajouré et qui est destiné à recevoir les aliments.

2. Marmite selon la revendication 1, caractérisée en ce que le récipient intérieur (2) précité est réalisé sous la forme d'un coprs qui repose par sa base (3) sur le fond du récipient extérieur précité (1).

3. Marmite selon la revendication 1, caractérisée en ce que les récipients extérieur (1) et intérieur (2) précités sont pourvus de moyens permettant de les solidariser l'un de l'autre.

4. Marmite selon l'une quelconque des revendications 1 - 3, caractérisée en ce que le fond ajouré (5) du récipient intérieur précité (2) est amovible de telle sorte que des fonds ajourés (5) présentant des perforations de types divers puissent être utilisés.

5. Marmite selon la revendication 4, caractérisée en ce que le récipient intérieur précité (2) présente des moyens permettant de disposer un fond ajouré (5) à une distance prédéterminée du bord inférieur (3) du récipient intérieur précité (2).

6. Marmite selon l'une quelconque des revendications 1 - 5, caractérisée en ce qu'au moins le récipient extérieur précité est équipé d'un couvercle (12).

7. Marmite selon la revendication 6, caractérisée en ce que le couvercle précité présente au moins un trou (13) pour permettre à la vapeur de s'échapper.

Fig.1.

EP 0 375 825 A1

Fig.2.

Fig.3.

Fig.4.

Fig.5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-1413744 (LE DUC)<br>* le document en entier * | 1, 2,<br>4-6 | A47J36/20<br>A47J27/04 |
| X | CH-A-286818 (WAGNER)<br>* le document en entier * | 1, 2, 4,<br>6 | |
| Y | | 3, 7 | |
| Y | US-A-2622591 (BRAMBERRY)<br>* figures 1, 2 * | 3, 7 | |
| A | DE-C-237068 (SCHRADER)<br>* le document en entier * | 1, 4 | |
| A | FR-A-962666 (SMRODYNI)<br>* page 1, ligne 44 * | 1 | |

|  |
|---|
| **DOMAINES TECHNIQUES RECHERCHES (Int. Cl.5 )** |
| A47J |

Le présent rapport a été établi pour toutes les revendications

| Lieu de la recherche | Date d'achèvement de la recherche | Examinateur |
|---|---|---|
| LA HAYE | 02 AOUT 1989 | MEINDERS H. |

EPO FORM 1503 03.82 (P0402)

**CATEGORIE DES DOCUMENTS CITES**

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...................................................................................
& : membre de la même famille, document correspondant